# EUROPEAN PATENT SPECIFICATION

(11) **EP 2 249 106 B1**
(45) Date of publication and mention of the grant of the patent: **18.04.2012**
(21) Application number: 10160925.3
(22) Date of filing: 23.04.2010
(51) Int. Cl.: F25B 15/04, F25B 30/04

(54) **Absorption heat pump for extreme operating conditions**
Absorptionswärmepumpe für extreme Einsatzbedingungen
Pompe à chaleur par absorption pour conditions de fonctionnement extrêmes

(30) Priority: 29.04.2009 IT MI20090726
(43) Date of publication of application: 10.11.2010
(73) Proprietor: Guerra, Marco, 24129 Bergamo (BG) (IT)
(72) Inventor: Guerra, Marco, 24129 Bergamo (BG) (IT)
(74) Representative: Vanosi, Adelio Valeriano

(56) References cited:
- EP-A2- 0 757 215
- JP-A- 8 271 080

## Description

The present invention relates to a heat pump for extreme operating conditions.

In known heat pumps used for heating, the facility to provide high temperatures is a merit because such pumps can then replace traditional boilers without modifying the systems in which they are inserted. These traditional systems present for example a burner associated with a heat exchanger through which water is pumped to feed one or more radiators or convectors.

Even in low or medium temperature heating systems, known climatic curve controllers require the temperature of the water fed to the radiators (or radiant panels or convectors) to be increasingly higher as the temperature of the external environment decreases.

One of the difficulties of widely promoting heat pumps in general is precisely the impossibility of bringing the water circulating within the fixed system to a temperature higher than 65ºC. Under conditions close to that temperature the effective efficiency of the heat pump falls off drastically and is considerably different from the theoretical efficiency.

The need to obtain relatively much higher water temperatures (higher than 65ºC) is greatest essentially in two cases: when the external temperature is very low and when hot water is required for domestic use.

As already stated, under these conditions the heat pump efficiency falls to very low levels.

Solutions have been implemented which enable high temperatures to be obtained in such conditions; however these solutions use burner power modulation which essentially decreases the pump power itself and is unacceptable.

EP0757215 describes a heat pump according to the pre-characterizing portion of claim 1.

An object of the present invention is to provide a heat pump able to supply high temperature water to a fixed heating system or to a domestic water generation system while maintaining high efficiency, preferably while maintaining the generator at its maximum power.

This and other objects are attained by a heat pump formed in accordance with the technical teachings of the accompanying claims.

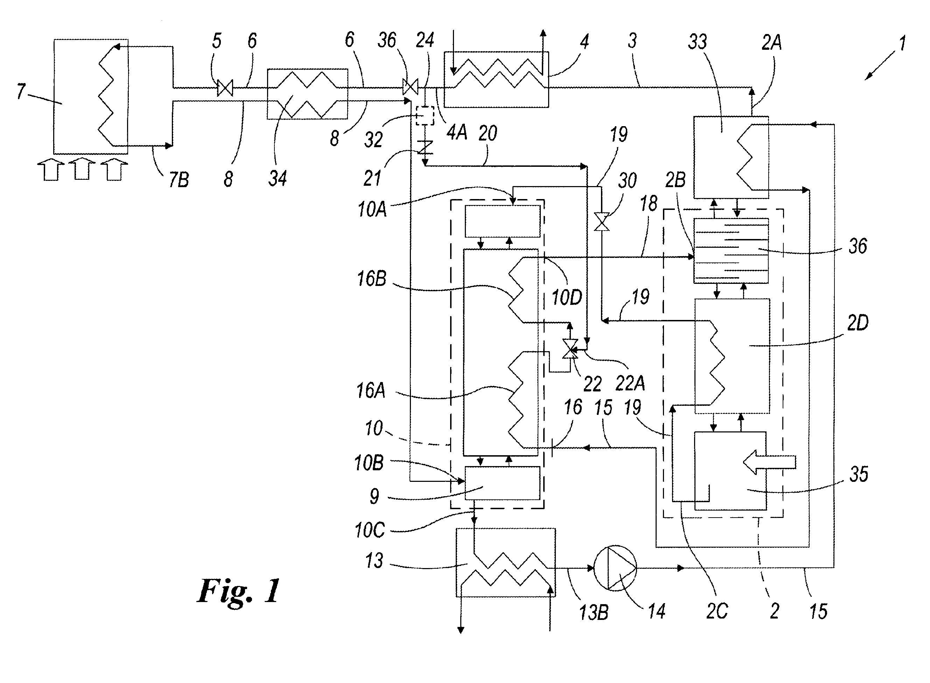

Further characteristics and advantages of the invention will be apparent from the description of a preferred but non-exclusive embodiment of the heat pump, illustrated by way of non-limiting example in the accompanying drawings, in which the single figure shows a simplified scheme of the heat pump of the present invention.

With reference to said figure, this shows a heat pump indicated overall by the reference numeral 1.

It operates with a cycle using as refrigerant a first fluid (in this specific case ammonia), which is absorbed in a second fluid (in this case water). The absorption heat pump comprises a conventional generator 2 or desorber presenting a finned gas burner 35, which feeds a conventional plate column 36. The plate column 36 is connected to a rectifier 33, described hereinafter. The vapour outlet of the generator is connected via a rectifier and a first line 3 to a condenser 4 of conventional type, positioned in heat exchange contact with a transmission fluid which feeds the heating plant. This fluid is typically water fed into the plant by a pump, not shown.

A countercurrent heat exchanger 34 is provided downstream of the condenser 4 in a second line 6 connecting the condenser to an evaporator 34 via a lamination valve 5, to exchange heat with the vapour circulating through a third line 8 connecting the evaporator 7 to an inlet 10B of an absorber 10. A further lamination valve 36 is provided upstream of the heat exchanger 34.

As already stated, an evaporator outlet 7B is connected by a third line 8 to an inlet 10B for vapour from said first fluid into the absorber 10, and specifically into a mixing zone 9.

The absorber 10 comprises a rich solution outlet 10C (ammonia absorbed in water) connected to a heat exchanger 13 in heat exchange contact with the transmission fluid of the heating plant.

An outlet 13B of the heat exchanger is connected to the suction side of a conventional pump 14, the delivery side of which is connected via a fourth line 15 to an inlet 16 of a circuit 16A, 16B in heat exchange contact with the absorber 10.

The fourth line 15 is in heat transmission contact with the rectifier 33 from which the rich ammonia solution subtracts heat to facilitate condensation of water vapour.

The circuit 16A, 16B subtracts heat from the absorber to hence transfer it to the rich solution originating from the pump 14 before being fed into the generator 2. This circuit is divided into two parts only for reasons of description. In this respect, in the first part of the circuit 16A the rich solution rises in temperature, while in the second part 16B the ammonia present in the solution begins to evaporate (at the pressure present in the circuit 16A, B) to essentially anticipate the work done by the generator 2. That part of the absorber involved with the circuit part 16B is commonly known as a GAX cycle.

A fifth line 18 extending from the heat exchanger 10 connects an outlet of the circuit 16A, 16B to an ammonia enriched solution (plus ammonia vapour) inlet 2B of the generator 2.

At the generator base, in proximity to the burner 35, an outlet 2C is provided from which a poor ammonia solution is directed, via a sixth line 19 provided with at least one lamination valve 30, to a poor solution inlet 10A provided in the absorber 10, after yielding heat to the fluids present in the generator in a central portion 2D thereof.

The present invention provides a system for maintaining the top of the desorber plate column "colder" and reducing the rectifier load when high temperatures are required at the heat exchangers 4 and 13. To achieve this, the flow and/or NH₃ concentration of the rich solution entering the generator 2 is increased. This can be done by bleeding off part of the liquid refrigerant leaving the condenser and mixing it with the rich solution line entering the generator, by using the suction effect of a liquid-liquid injector.

Specifically, a point 22 for the introduction (or feed) of condensed vapour (liquid ammonia) into the rich ammonia solution is provided between the inlet 16 of the circuit composed of the first and second part 16A, 16B and the rich solution inlet 2B of the generator.

The introduction point 22 is shown by a full line and indicated by the reference numeral 22A. With this solution the withdrawal line 20 which starts from the withdrawal point 24 advantageously feeds into the venturi 22A shown in the figure. This is positioned in a circuit portion downstream of the first part 16A and upstream of the second part 16B. It is important that the introduction of refrigerant takes place at a point downstream of which there is at least one further heat exchange for the rich solution, in this case with the absorber 10.

Introducing bled refrigerant into the solution flow "costs" in terms of machine power (refrigerant flow to the evaporator). This cost can be minimized to obtain an advantage under certain conditions.

This introduction point is particularly advantageous when located in a point of the circuit 16A, 16B in which the solution present therein has a temperature close to that of the temperature resulting from mixing the two flows, i.e. the refrigerant flow and the solution flow. In this respect, adiabatic mixing of two liquid flows [for example 44% NH₃ in the solution, 99% NH₃ in the refrigerant] results in a flow at a temperature greater than the two inlet temperatures.

This optimum temperature is between 60°C and 90°C, preferably between 70°C and 80°C.

If the refrigerant bypass flow is for example 10% of the refrigerant, then ammonia concentration in the rich solution can increase by between 2 and 4%. This implies that the GAX regenerator (second portion 16B of the circuit) begins to reboil the solution at a temperature less by 4°C and 6°C, compared with when the ammonia concentration in the solution is less. For example, for an ammonia concentration of 44% in the solution, the boiling temperature at 20 bar is 103°C. By increasing the concentration to 47% with the bypass line 20, 20A, 20B, the boiling temperature falls to 97°C at the same pressure. The vapour regenerated hence "recovers" the expense of the bypass.

This results in a lowering of the desorber column and rectifier temperature by about 10-15°C, with considerable benefits.

The result is that for equal evaporator power there is a greater "load" at the condenser (which therefore has to be slightly over-dimensioned). However there is a lesser load at the rectifier and generator, which work at lower temperature.

This situation becomes very interesting precisely when high (> 65°C) water temperatures are required from the heating plant, or for generating domestic hot water. In this case, conventional heat pumps generate pressures and temperatures which cause the desorber column to "work" at its limit, so bringing the rectifier load to critical levels, and drastically reducing the refrigerant flow fed to the condenser (also because the GAX regenerator at these high pressures does not regenerate refrigerant vapour). Increasing the heat exchanger surfaces does not improve the situation, while at high temperatures the risk of surface corrosion increases.

Bypassing the refrigerant according to the invention increases the rich solution concentrations, so extending system working conditions.

The refrigerant injection or feed takes place preferably by means of a venturi, which enables the refrigerant to be "drawn" into the solution. However, injection can be effected by any other suitable means.

In addition to comprising a refrigerant non-return valve 32, the refrigerant feed line 20 can also comprise a solenoid valve or the like which completely excluders the bypass line, hence enabling the heat pump to be used in a completely conventional manner.

It has been seen that by introducing the aforedescribed circuit modification, the heat pump operates under a wide variety of conditions, with much higher efficiencies than conventional heat pumps, especially when these conditions are extreme.

Various embodiments of the invention have been described, but others can be conceived by utilizing the same inventive concept. All the described components can be replaced by technically equivalent elements. Moreover the refrigerant and the liquid in which it is absorbed can be chosen at will in conformity with the necessary technical requirements.

## Claims

1. An absorption heat pump comprising a generator (2) or desorber connected via a first line (3) to a first condenser (4) in heat exchange contact with a transmission fluid, downstream of the condenser there being provided a second line (6) entering an evaporator (7), the second line (6) comprising at least a first lamination valve (5), an evaporator outlet (7B) being connected by a third line (8) to an inlet (10B) for vapour from a first fluid into an absorber (10), comprising an outlet (10C) for an enriched solution of said first fluid absorbed in a second fluid, the outlet (10C) being connected to a heat exchanger (13) in heat transmission contact with the transmission fluid, an outlet (13B) of the heat exchanger being connected to a suction side of a pump (14), the delivery side of which is connected by a fourth line (15) to an inlet (16) of a circuit (16A, 16B) in heat transmission contact with the absorber (10), a fifth line (18) connecting said circuit (16A, 16B) to a rich solution inlet (2B) of the generator (2), the generator having a poor solution outlet (2C) connected by a sixth line (19) provided with a lamination valve (30) to a poor solution inlet (10A) provided in the absorber (10), **characterised in that** an introduction point (22) of condensed vapour from said first fluid circulating through the circuit (16A, 16B) is provided between the inlet (16) of the circuit (16A, 16B) and the rich solution inlet of the generator (2).

2. A heat pump as claimed in the preceding claim, wherein the condensed vapour is withdrawn at a withdrawal point (24) positioned directly downstream of the condenser by a withdrawal line (20).

3. A heat pump as claimed in one or more of the preceding claims, wherein a non-return valve (21) is provided in the withdrawal line (20), between the withdrawal point and the introduction point.

4. A heat pump as claimed in one or more of the preceding claims, wherein the introduction point (22) is in the form of a venturi tube.

5. A heat pump wherein said introduction point is provided between a first (16A) and a second (16B) portion of said circuit.

6. A heat pump wherein said withdrawal line comprises a valve (32) arranged to exclude it when necessary.

7. A heat pump wherein a rectifier (32) in heat exchange contact with the fluid leaving the pump (15) is provided between the generator (2) and condenser (4).

8. A heat pump wherein the sixth line (19) is in heat exchange contact with a central portion (2D) of the generator.

9. A heat pump wherein the fluids present in the second (3) and third line (4) are brought into heat transmission contact by means of a heat exchanger (34).

10. A pump as claimed in the preceding claim, wherein a further lamination valve (36) is provided at the inlet of the heat exchanger (34).

11. A method for improving the efficiency of the absorption heat pumps of claim 1, when under desorber power modulation conditions, comprising the step of bleeding off liquid refrigerant downstream of the condenser and mixing it with the rich solution after this latter has been at least partially heated by the absorber and before it undergoes further heat exchange with the absorber and is fed into the desorber.

12. A method as claimed in the preceding claim, wherein the refrigerant is bled off between the condenser and the evaporator.

13. A method as claimed in claim 11, wherein the refrigerant is mixed with the rich solution at a point in which the difference between the temperature of the solution before its mixing and the temperature resulting from mixing the solution with the refrigerant is between -5°C and 5°C.

14. A method as claimed in claim 11, wherein the introduction point is in a region in which the solution temperature is between 60°C and 90°C, preferably between 70°C and 80°C, for a heat pump in which the refrigerant is ammonia and the liquid in which it is absorbed is water.

15. A method as claimed in claim 11, wherein said mixing is achieved by a venturi.

16. A method as claimed in claim 12, wherein said bleeding can be excluded, depending on the pump working conditions.

## Patentansprüche

1. Absorptionswärmepumpe umfassend einen Generator (2) oder Desorber, der mittels einer ersten Leitung (3) mit einem ersten Kondensator (4), der in Wärmeaustauschkontakt mit einer Übertragungsflüssigkeit ist, verbunden ist, wobei stromabwärts des Kondensators eine zweite Leitung (6), die in einen Verdampfer (7) eintritt, bereitgestellt ist, wobei die zweite Leitung (6) mindestens ein erstes Lamellenventil (5) umfasst, wobei ein Verdampferauslass (7B) mittels einer dritten Leitung (8) mit einem Einlass (10B) für Dampf einer ersten Flüssigkeit in einen Absorber (10) verbunden ist, der einen Auslass (10C) für eine angereicherte Lösung der ersten Flüssigkeit, die in einer zweiten Flüssigkeit absorbiert ist, umfasst, wobei der Auslass (10C) mit einem Wärmetauscher (13) in Wärmeübertragungskontakt mit der Übertragungsflüssigkeit verbunden ist, wobei ein Auslass (13B) des Wärmeaustauschers mit einer Ansaugseite einer Pumpe (14) verbunden ist, wobei deren Druckseite mittels einer vierten Leitung (15) mit einem Einlass (16) eines Kreises (16A, 16B) in Wärmeübertragungskontakt mit dem Absorber (10) verbunden ist, wobei eine fünfte Leitung (18) den Kreis (16A, 16B) mit einem Einlass (2B) des Generators (2) für eine angereicherte Lösung verbindet, wobei der Generator einen Auslass (2C) für eine abgereicherte Lösung hat, der mittels einer sechsten Leitung (19), die mit einem Lamellenventil (30) bereitgestellt ist, mit einem in dem Absorber (10) bereitgestellten Einlass (10A) für eine abgereicherte Lösung verbunden ist, **dadurch gekennzeichnet, dass** ein Zuführpunkt (22) des kondensierten Dampfes der ersten Flüssigkeit, die durch den Kreis (16A, 16) zirkuliert, zwischen dem Einlass (16) des Kreises (16A, 16B) und dem Einlass des Generators (2) für die angereicherte Lösung bereitgestellt ist.

2. Wärmepumpe wie in dem voranstehenden Anspruch beansprucht, wobei der kondensierte Dampf mittels einer Entnahmeleitung (20) an einem Entnahmepunkt (24) entnommen wird, der direkt stromabwärts des Kondensators positioniert ist.

3. Wärmepumpe wie in einem oder mehreren der voranstehenden Anprüche beansprucht, wobei ein Rückschlagventil (21) zwischen dem Entnahmepunkt und dem Zuführpunkt in der Entnahmeleitung (20) bereitgestellt ist.

4. Wärmepumpe wie in einem oder mehreren der voranstehenden Ansprüche beansprucht, wobei der Zuführpunkt (22) in der Form eines Venturi-Rohrs ist.

5. Wärmepumpe, wobei der Zuführpunkt zwischen einem ersten (16A) und einem zweiten (16B) Abschnitt des Kreises bereitgestellt ist.

6. Wärmepumpe, wobei die Entnahmeleitung ein Ventil (32) umfasst, welches angeordnet ist, um diese wenn notwendig abzuschließen.

7. Wärmepumpe, wobei ein Gleichrichter (32) in Wärmeaustauschkontakt mit der Flüssigkeit, die die Pumpe (15) verlässt, zwischen dem Generator (2) und dem Kondensator (4) bereitgestellt ist.

8. Wärmepumpe, wobei die sechste Leitung (19) in Wärmeaustauschkontakt mit einem zentralen Abschnitt (2D) des Generators ist.

9. Wärmepumpe, wobei die Flüssigkeiten, die in der zweiten (3) und dritten Leitung (4) anwesend sind, mittels eines Wärmetauschers (34) in Wärmeübertragungskontakt gebracht werden.

10. Wärmepumpe wie in den voranstehenden Ansprüchen beansprucht, wobei ein weiteres Lamellenventil (36) an dem Einlass des Wärmetauschers (34) bereitgestellt ist.

11. Verfahren zum Verbessern der Effizienz der Absorptionswärmepumpen des Anspruchs 1, wenn diese unter Desorberleistungsmodulationsbedingungen sind, umfassend den Schritt des Ableitens von flüssigem Kühlmittel stromabwärts des Kondensators und Mischen dieses mit der angereicherten Lösung, nachdem die letztgenannte zumindest teilweise durch den Absorber erhitzt wurde und bevor sie weiterem Wärmeaustausch mit dem Absorber unterzogen wird und sie dem Desorber zugeleitet wird.

12. Verfahren wie in dem voranstehenden Anspruch beansprucht, wobei das Kühlmittel zwischen dem Kondesator und dem Verdampfer abgeleitet wird.

13. Verfahren wie in Anspruch 11 beansprucht, wobei das Kühlmittel mit der angereicherten Lösung an einem Punkt gemischt wird, an dem der Unterschied zwischen der Temperatur der Lösung vor ihrer Mischung und der Temperatur, die aus der Mischung der Lösung mit dem Kühlmittel resultiert, zwischen -5°C und 5°C ist.

14. Verfahren wie in Anspruch 11 beansprucht, wobei der Zuführpunkt in einer Gegend ist, in der die Lösungstemperatur zwischen 60°C und 90°C, vorzugsweise zwischen 70°C und 80°C ist, für eine Wärmepumpe, in welcher das Kühlmittel Ammoniak ist, und die Flüssigkeit, in welcher es absorbiert wird, Wasser ist.

15. Verfahren wie in Anspruch 11 beansprucht, wobei das Mischen mittels eines Venturi-Rohrs erreicht wird.

16. Verfahren wie in Anspruch 12 beansprucht, wobei das Ableiten abhängig von den Pumpenarbeitsbedingungen ausgeschlossen werden kann.

## Revendications

1. Pompe à chaleur à absorption comprenant un générateur (2) ou désorbeur relié par l'intermédiaire d'une première ligne (3) à un premier condenseur (4) en contact d'échange de chaleur avec un fluide de transmission, une deuxième ligne (6) entrant dans un évaporateur (7) étant prévue en aval du condenseur, la deuxième ligne (6) comprenant au moins une première vanne de laminage (5), une sortie d'évaporateur (7B) étant connectée par une troisième ligne (8) à une entrée (10B) pour de la vapeur provenant d'un premier fluide dans un absorbeur (10), comprenant une sortie (10C) pour une solution enrichie dudit premier fluide absorbé dans un second fluide, la sortie (10C) étant reliée à un échangeur de chaleur (13) en contact de transmission de chaleur avec le fluide de transmission, une sortie (13B) de l'échangeur de chaleur étant reliée à un côté aspiration d'une pompe (14), dont le côté refoulement est relié par une quatrième ligne (15) à une entrée (16) d'un circuit (16A, 16B) en contact de transmission de chaleur avec l'absorbeur (10), une cinquième ligne (18) reliant ledit circuit (16A, 16B) à une entrée de solution riche (2B) du générateur (2), le générateur ayant une sortie de solution pauvre (2C) reliée par une sixième ligne (19) munie d'une vanne de laminage (30) à une entrée de solution pauvre (10A) prévue dans l'absorbeur (10), **caractérisée en ce qu'**un point d'introduction (22) de vapeur condensée provenant dudit premier fluide circulant à travers le circuit (16A, 16B) est prévu entre l'entrée (16) du circuit (16A, 16B) et l'entrée de solution riche de la génératrice (2).

2. Pompe à chaleur comme revendiqué dans la revendication précédente, dans laquelle la vapeur condensée est prélevée au niveau d'un point de prélèvement (24) positionné directement en aval du condenseur par une ligne de prélèvement (20).

3. Pompe à chaleur selon l'une ou plusieurs des revendications précédentes, dans laquelle un clapet de non-retour (21) est prévu dans la ligne de prélèvement (20), entre le point de prélèvement et le point d'introduction.

4. Pompe à chaleur selon l'une ou plusieurs des revendications précédentes, dans laquelle le point d'introduction (22) est réalisé sous la forme d'un tube de Venturi.

5. Pompe à chaleur dans laquelle ledit point d'introduction est prévu entre une première (16A) et une seconde (16B) partie dudit circuit.

6. Pompe à chaleur dans laquelle ladite ligne de prélèvement comprend une soupape (32) agencée pour l'exclure si nécessaire.

7. Pompe à chaleur dans laquelle un redresseur (32) en contact d'échange de chaleur avec le fluide sortant de la pompe (15) est prévu entre le générateur (2) et le condenseur (4).

8. Pompe à chaleur dans laquelle la sixième ligne (19) est en contact d'échange de chaleur avec une partie centrale (2D) du générateur.

9. Pompe à chaleur dans laquelle les fluides présents dans les deuxième (3) et troisième (4) lignes sont mis en contact de transmission de chaleur au moyen d'un échangeur de chaleur (34).

10. Pompe selon la revendication précédente, dans laquelle une vanne de laminage supplémentaire (36) est prévue au niveau de l'entrée de l'échangeur de chaleur (34).

11. Procédé pour améliorer l'efficacité des pompes à chaleur à absorption selon la revendication 1, lorsqu'elles sont soumises à des conditions de modulation de puissance de désorbeur, comprenant l'étape consistant à prélever du fluide frigorigène liquide en aval du condenseur et à le mélanger avec la solution riche après que cette dernière a été au moins partiellement chauffée par l'absorbeur et avant qu'elle ait subi un échange de chaleur supplémentaire avec l'absorbeur et soit introduite dans le désorbeur.

12. Procédé selon la revendication précédente, dans lequel le fluide frigorigène est prélevé entre le condenseur et l'évaporateur.

13. Procédé selon la revendication 11, dans lequel le fluide frigorigène est mélangé avec la solution riche au niveau d'un point où la différence entre la température de la solution avant son mélange et la température résultant du mélange de la solution avec le fluide frigorigène est comprise entre -5 °C et 5 °C.

14. Procédé selon la revendication 11, dans lequel le point d'introduction est situé dans une région dans laquelle la température de la solution est comprise entre 60 °C et 90 °C, de préférence entre 70 °C et 80 °C, pour une pompe à chaleur dans laquelle le fluide frigorigène est de l'ammoniac et le liquide dans lequel il est absorbé est de l'eau.

15. Procédé selon la revendication 11, dans lequel ledit mélange est réalisé par un venturi.

16. Procédé selon la revendication 12, dans lequel ledit prélèvement peut être exclu, en fonction des conditions de fonctionnement de la pompe.
